# FASCICULE DE BREVET EUROPEEN

(11) **EP 2 522 547 B1**
(45) Date de publication et mention de la délivrance du brevet: **20.06.2018**
(21) Numéro de dépôt: 12167785.0
(22) Date de dépôt: 11.05.2012
(51) Int. Cl.: B60Q 1/072

(54) **Correcteur de portée à câble pour projecteur de véhicule automobile**
Kabelgeführte Leuchtweitenregelungseinrichtung für Scheinwerfer eines Kraftfahrzeugs
Leveling device for a vehicle headlamp with a bowden cable

(30) Priorité: 12.05.2011 FR 1154136
(43) Date de publication de la demande: 14.11.2012
(73) Titulaire: AML Systems, 75008 Paris (FR)
(72) Inventeur: Koulouh, Hassan, 93310 LE PRE SAINT GERVAIS (FR); Widiez, Stéphane, 92220 BAGNEUX (FR)
(74) Mandataire: Gevers & Orès

(56) Documents cités:
- FR-A1- 2 283 797
- FR-A1- 2 403 237
- FR-A1- 2 443 348
- US-A1- 2005 145 050

## Description

Le domaine de l'invention est celui des projecteurs pour véhicules automobiles.

Un projecteur comporte une source lumineuse disposée devant un réflecteur optique, l'ensemble produisant un faisceau lumineux que bon nombre de règlementations imposent aujourd'hui de pouvoir, depuis l'habitacle, orienter à volonté, de pouvoir plus ou moins le rabattre ou le remonter, bref un faisceau dont la portée doit pouvoir être corrigée. On parle d'ailleurs de correction de portée.

On a longtemps utilisé comme actionneurs des correcteurs électriques comportant un moteur, avec une carte électronique, agencé pour, par l'intermédiaire d'un train d'engrenages, entraîner en translation une tige destinée à faire basculer le réflecteur, le moteur étant commandé par un organe de commande à portée du conducteur du véhicule, généralement sur le tableau de bord. En raison du coût d'un tel moteur de correction associé à sa carte, on a proposé un correcteur à câble et gaine, du type des câbles de frein des bicyclettes.

Un correcteur à câble comporte un chariot qu'on appelle entraîneur duquel est solidaire une tige poussoir, souvent avec une extrémité sphérique verrouillée dans le réflecteur optique, d'actionnement, de basculement, du réflecteur et sur lequel est ancré le câble sur lequel le conducteur du véhicule peut tirer plus ou moins à l'aide d'un organe de commande et de réglage - généralement un bouton rotatif - pour, contre l'action d'un ressort de rappel, entraîner le chariot en translation, et donc avec lui la tige de basculement, étant entendu que c'est sous l'action du ressort que bascule le réflecteur.

Un ensemble câble et gaine assure la liaison mécanique entre l'actionneur et la commande. Chaque câble est protégé par une gaine qui lui est propre (longueur) et dont le cheminement (courbure) dans le compartiment moteur est assuré par des accroches mécaniques. Les extrémités de gaine sont fixées respectivement sur les parties fixes de la commande et de l'actionneur. Le câble n'est sollicité qu'en traction et assure la transmission du mouvement entre la commande et l'actionneur.

Le problème des correcteurs à câble vient du jeu introduit par le câble, c'est-à-dire de la "course morte", c'est-à-dire de la longueur de câble qu'il faut tirer avant que le chariot ne se déplace, en raison notamment d'élongations qui résultent de la température, du fluage des matières, de la dispersion des tolérances, des différents composants, des jeux résiduels entre les composants mobiles.

Les fabricants d'actuateurs ont alors été priés de proposer des correcteurs à action directe, avec lesquels, dès qu'on commence à agir sur le bouton de commande, le chariot commence à se déplacer. De surcroît, on a recherché à rendre le déplacement du chariot directement dépendant de la commande et indépendant de la longueur du câble entre le chariot et la commande.

C'est ainsi qu'on a proposé des correcteurs avec double réglage, un réglage initial sur la chaîne d'assemblage des véhicules, dit manuel, par action directe sur le chariot, et un ou des réglages opérationnels ultérieurs par le câble.

Le réglage manuel initial vise donc à assurer le réglage en position de l'extrémité sphérique de la tige de basculement et à s'affranchir des tolérances et il s'effectue en comprimant plus ou moins un ressort qui, incidemment, doit pouvoir complètement rabattre le réflecteur en cas de rupture du câble. Ce ressort de compression assure donc à la fois le rôle d'un organe mécanique de sécurité et de prétentionneur du système câble, gaine.

Ainsi, le réglage vise à déterminer la compression du ressort dont la fonction est de pousser le chariot et la tige poussoir de basculement.

Mais du fait encore des tolérances, à chaque réglage manuel d'un correcteur correspond une compression déterminée du ressort, différente d'un correcteur à l'autre. Il en résulte que, à un correcteur donné et un déplacement d'entraîneur donné sous l'action d'un entraînement donné de l'organe (bouton) de commande, correspond un effort (couple) donné à exercer sur l'organe de commande.

La demanderesse a donc cherché à s'affranchir de cette dispersion d'efforts d'un correcteur à câble à l'autre et, plus généralement, à proposer un correcteur à câble dont le réglage manuel initial soit sans incidence sur les réglages ultérieurs par câble. Un correcteur de portée à câble selon le préambule de la revendication 1 est connu de FR 2 403 237.

Ainsi, l'invention de la présente demande concerne un correcteur de portée à câble pour projecteur de véhicule automobile comportant les caractéristiques de la revendication 1. Grâce à l'invention, le réglage initial manuel, qui n'affecte pas le ressort de rappel, et les réglages ultérieurs par câble sont parfaitement dissociés. Il en résulte que le correcteur de portée assure un couple d'utilisation lors de la rotation du bouton de commande du tableau de bord indépendant du réglage initial manuel. Grâce encore à cela, on évite d'avoir à surdimensionner le ressort et on resserre la plage utile de couple de commande.

Avantageusement, le manchon de réglage manuel comporte une couronne dentée agencée pour coopérer avec un pignon d'entraînement.

Selon un premier concept de réalisation, c'est l'entraîneur qui est animé d'un mouvement de translation ou de rotation grâce au manchon, la tige est montée coulissante dans l'entraîneur, le ressort de rappel est en appui contre la tige et contre l'entraîneur et le câble de réglage est ancré dans la tige.

Dans une première forme de réalisation du premier concept, le manchon est vissé sur l'entraîneur et la gaine du câble est montée sur le boîtier, la rotation du manchon provoquant la translation de l'entraîneur et, avec lui, la translation de la tige, du ressort, et du câble. Dans une deuxième forme de réalisation du premier concept, l'entraîneur est vissé dans le boîtier et la gaine est montée sur l'entraîneur, le manchon est agencé pour entraîner l'entraîneur en rotation qui est entraîné en translation par le mouvement hélicoïdal avec le boîtier dans lequel il est vissé, la tige étant conformée pour être entraînée en translation par l'entraîneur.

Dans cette deuxième forme, durant le réglage manuel, la tige et l'entraîneur étant animés du même mouvement de translation, comme la gaine du câble de réglage est montée sur l'entraîneur et le câble est fixé à la tige, le câble et sa gaine conservent leur position relative, même s'ils bougent par rapport au boîtier, le ressort conservant ainsi sa compression d'origine.

Selon un deuxième concept de réalisation, c'est la tige qui est animée d'un mouvement hélicoïdal grâce au manchon, la tige est vissée sur l'entraîneur, le ressort de rappel est en appui contre l'entraîneur et contre le boîtier, l'entraîneur est bloqué en par rapport au boîtier et le câble de réglage est ancré dans l'entraîneur.

L'invention sera mieux comprise à l'aide de la description suivante de plusieurs formes de réalisation du correcteur de portée, en référence au dessin en annexe sur lequel
- la figure 1 est une vue schématique d'un projecteur avec son réflecteur lié à la tige de basculement du correcteur de l'invention ;
- la figure 2 est une vue en coupe d'une première forme de réalisation du correcteur, avec mouvement hélicoïdal de l'entraîneur directement par le manchon de réglage et translation de la tige ;
- la figure 3 est une vue en coupe d'une deuxième forme de réalisation du correcteur, avec mouvement hélicoïdal de l'entraîneur par le manchon de réglage et le boîtier du correcteur et
- la figure 4 est une vue en coupe d'une troisième forme de réalisation du correcteur, avec mouvement hélicoïdal de la tige de basculement par le manchon de réglage.

Vont maintenant être décrites plusieurs formes de réalisation du correcteur de portée de l'invention qui est un dispositif 1 destiné à corriger la portée du faisceau d'un projecteur 2. Il s'agit du faisceau produit par une source lumineuse 3 placée devant un réflecteur optique 4. Corriger la portée implique de pouvoir rabattre ou remonter le faisceau. A cet effet, le correcteur 1 comporte une tige de basculement 13 qui est entraînée en translation pour faire basculer le réflecteur 4 monté pivotant sur une rotule 6 disposée dans le projecteur. La tige de basculement 13 du correcteur comporte une extrémité d'actionnement sphérique 10 verrouillée, mais pas en rotation, dans un plot arrière 5 du réflecteur 4.

### Première forme de réalisation

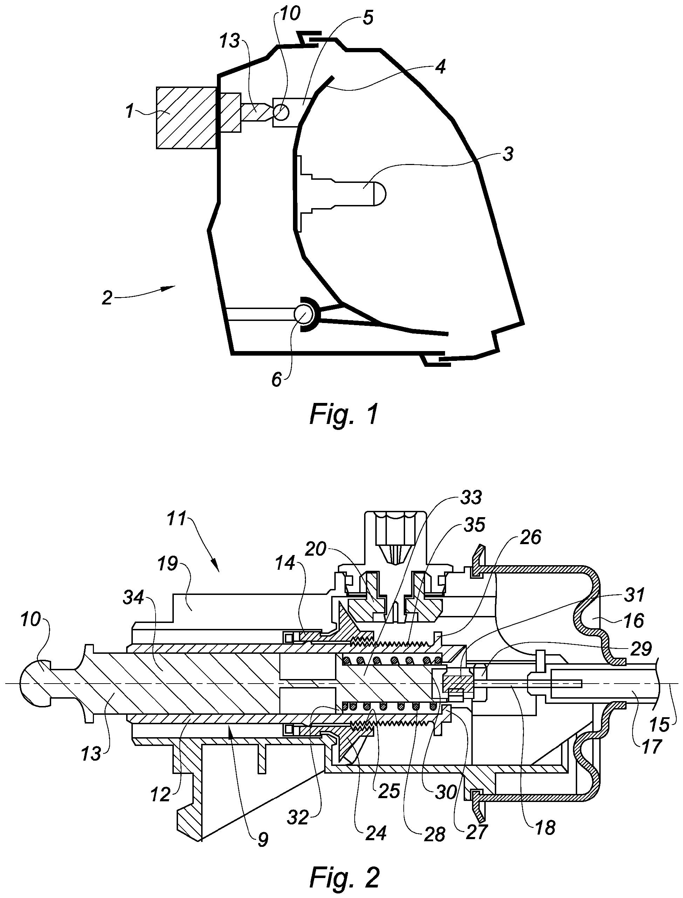

En référence à la figure 2, le correcteur de portée comporte, dans un boîtier 11, un équipage 9 à deux organes - un entraîneur 12 et une tige 13 de basculement du réflecteur du projecteur -, le correcteur comportant en outre un manchon 14 de réglage manuel de la position de la tige.

Le boîtier 11 est un élément tubulaire, d'axe 15, avec un flasque d'extrémité 16, opposé à l'extrémité d'actionnement 10 de la tige 13. La gaine 17 d'un câble de réglage 18 est montée dans la partie centrale du flasque 16. Sur la partie centrale de la jupe tubulaire 19 du boîtier, est monté un pignon rotatif 20, qu'un opérateur peut entraîner en rotation à l'aide d'une visseuse.

Le manchon de réglage 14, d'axe 15, comporte, du côté de son extrémité opposée à l'extrémité d'actionnement 10 de la tige, une couronne dentée 24 destinée à être entraînée en rotation par le pignon 20. La paroi intérieure 25 de la couronne 24 est taraudée.

L'entraîneur 12 se présente aussi sous forme d'un long manchon d'axe 15. Du côté opposé à l'extrémité d'actionnement 10 de la tige, l'entraîneur comporte un rebord annulaire extérieur 26 destiné à servir de butée au manchon de réglage 14. Toujours du même côté, l'entraîneur tubulaire 12 présente un rebord intérieur 27 destiné à servir d'appui à un ressort de rappel 28.

La tige d'actionnement 13 a une forme générale cylindrique avec, à un bout, l'extrémité sphérique d'actionnement 10 et, à l'autre bout, une extrémité évidée 29 ménageant un logement 30 de réception d'un embout 31 du câble 18 qui se trouve ainsi ancré dans la tige 13.

La tige 13 comporte, depuis un épaulement annulaire 32, une partie rétrécie 33 qui se prolonge jusqu'à l'extrémité évidée 29 et autour de laquelle s'étend le ressort de rappel 28 qui se trouve donc en appui contre l'épaulement 32 et le rebord intérieur 27. Sur une bonne portion de sa longueur axiale 35, l'entraîneur est extérieurement fileté pour coopérer par vissage avec le taraudage 25 de la couronne 24.

Le câble 18 s'étend depuis l'embout d'ancrage 31, à travers la gaine 17, jusqu'à un bouton de commande situé sur le tableau de bord du véhicule sur lequel est monté le projecteur dont le réflecteur est à actionner.

La section de la partie élargie 34 de la tige 13 est sensiblement la même que la section intérieure de l'entraîneur 12, très légèrement inférieure, pour que la tige 13 puisse facilement coulisser à l'intérieur de l'entraîneur 12.

Après la description de ce correcteur, son fonctionnement va maintenant être abordé.

### Réglage manuel initial

A l'aide d'une visseuse, on fait tourner le pignon de réglage 20 qui entraîne en rotation la couronne dentée 24 et donc le manchon 14.

Du fait de la liaison hélicoïdale manchon-entraîneur, la rotation du manchon 14, immobilisé en translation, provoque, par vissage ou dévissage (25, 35,) la translation de l'entraîneur 12 et donc de tout l'équipage 9, avec la tige 13 dans l'entraîneur 12. Compte tenu de la force du ressort de rappel 28, lors du réglage manuel, l'ensemble des composants tige, entraîneur, ressort, et câble sont animés du même mouvement de translation. L'état du ressort 28 n'est donc pas modifié.

Ultérieurement, pour le réglage, lors de la conduite du véhicule, le câble 18, contre l'action du ressort 28, n'est sollicité qu'en traction et assure la transmission du mouvement entre la commande et le correcteur.

### Deuxième forme de réalisation

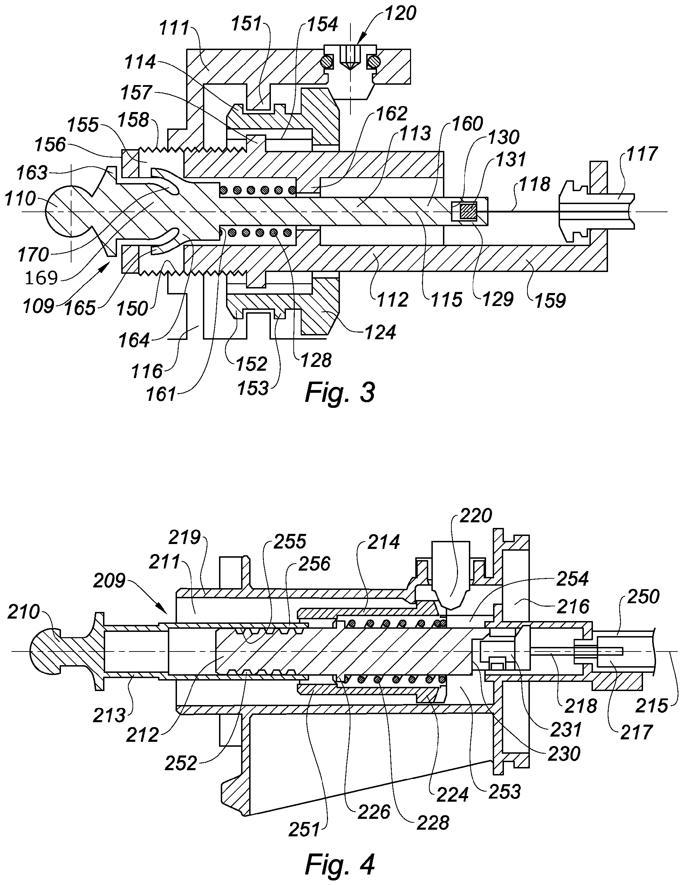

En référence à la figure 3, le correcteur de portée comporte, dans un boîtier 111, un équipage 109 à deux organes - un entraîneur 112 et une tige 113 de basculement du réflecteur du projecteur -, le correcteur comportant en outre un manchon 114 de réglage manuel de la position de la tige.

Le boîtier 111 est un élément tubulaire, d'axe 115, comportant, du côté de l'extrémité d'actionnement 110 de la tige 113, un flasque d'extrémité 116 percé d'un orifice taraudé 150. En deçà du flasque, le boîtier comporte une cloison annulaire transversale 151 d'une ouverture correspondant au diamètre extérieur du manchon 114. Le manchon de réglage 114, d'axe 115, comporte, du côté de son extrémité opposée à l'extrémité d'actionnement 110 de la tige, une couronne dentée 124 destinée à être entraînée en rotation par un pignon rotatif 120 qu'un opérateur peut entraîner en rotation à l'aide d'une visseuse. Le pignon 120 est monté dans la jupe tubulaire du boîtier, de l'autre côté du flasque 116 par rapport à la cloison 151.

Après montage, la cloison annulaire transversale 151 du boîtier 111 est disposée entre un rebord annulaire d'extrémité 152 et une nervure externe annulaire et transversale 153 du manchon 114, afin de l'immobiliser en translation.

Le manchon 114 comporte des cannelures axiales internes 154 pour l'entraînement en rotation de l'entraîneur.

L'entraîneur 112 a une forme générale tubulaire. Du côté de l'extrémité d'actionnement 110 de la tige, il comporte un évidement annulaire 155 dont la fonction apparaîtra plus loin. Entre son bord d'extrémité 156, proche de l'extrémité d'actionnement 110 de la tige, et une nervure externe radiale 157 destinée à coopérer avec les cannelures 154 du manchon 114, l'entraîneur 112 comporte un filetage externe 158 destiné à coopérer avec le taraudage 150 du boîtier 111.

Du côté opposé au bord 156 du boîtier, sa jupe se prolonge par une languette 159 support d'une gaine 117 d'un câble de traction et de réglage 118.

La tige d'actionnement a une forme générale cylindrique avec, d'un côté, une portion de réglage 169 et, de l'autre côté, une portion tubulaire amincie 160, au-delà d'un épaulement annulaire médian 161. Cette portion amincie est montée pour coulisser dans une nervure interne annulaire et radiale 162 de l'entraîneur 112 servant de glissière.

Un ressort de rappel 128 est monté autour de cette portion de tige amincie 160, en appui contre l'épaulement annulaire 161 de la tige et la nervure interne 162 de l'entraîneur.

L'extrémité libre 129 de la portion amincie 160 est évidée et ménage un logement 130 de réception d'un embout 131 du câble 118 qui se trouve ainsi ancré dans la tige 113.

La portion de réglage 169 de la tige d'actionnement 113 se termine par l'extrémité sphérique 110 de coopération avec le réflecteur du projecteur. En deçà de cette extrémité sphérique, la tige comporte un épaulement d'extrémité 163, ici tronconique, pour servir d'appui au bord d'extrémité 156 de l'entraîneur 112 dans son coulissement vers le réflecteur.

Entre l'épaulement 163 et l'épaulement 161, la portion de réglage 169 présente une petite jupe d'entraînement 164 dont le bord libre 165 fait saillie dans l'évidement annulaire 155 de l'entraîneur 112.

La tige d'actionnement 113 est donc engagée dans l'entraîneur 112, le bord libre 156 de l'entraîneur 112 se trouvant entre l'épaulement 163 et la jupe 164 de la tige qui est elle-même engagée dans l'évidement 155 de l'entraîneur, la nervure interne 162 de l'entraîneur servant de glissière à la portion amincie 160 de la tige. La section de passage de l'orifice du bord libre 156 de l'entraîneur par lequel passe la portion de réglage 169 de la tige n'étant que très légèrement supérieure à la section de cette portion de réglage.

Le câble 118 s'étend depuis l'embout d'ancrage 131, à travers la gaine 117, jusqu'à un bouton de commande situé sur le tableau de bord du véhicule.

Après la description de ce correcteur, son fonctionnement va maintenant être abordé.

### Réglage manuel initial

A l'aide d'une visseuse, on fait tourner le pignon de réglage 120 qui entraîne en rotation la couronne dentée 124 et donc le manchon 114. Du fait des cannelures internes 154 du manchon et de la nervure radiale 157 de l'entraîneur, il est entraîné en rotation. L'entraîneur étant vissé dans le boîtier, il s'anime d'un mouvement hélicoïdal. Dans son déplacement en translation, l'entraîneur 112 entraîne avec lui la gaine 117 et la tige 113 grâce, soit à son épaulement 163, soit à sa jupe 164, l'état du ressort 128, compte tenu de sa force n'étant pas modifié, ni dans un sens, ni dans l'autre.

Ultérieurement, pour le réglage lors de la conduite du véhicule, quand le câble 118 est sollicité, contre l'action du ressort 128, il tire la tige 113 dans laquelle il est ancré, la jupe 164, 165 pouvant, dans certaines circonstances, s'effacer sous l'action de la traction pour sortir de l'évidement 155 de l'entraîneur et se rabattre dans l'espace intérieur 170 ménagé à l'intérieur de la jupe. Cet espace 170 aide au montage sans casse de la jupe.

### Troisième forme de réalisation

En référence à la figure 4, le correcteur de portée comporte, dans un boîtier 211, un équipage 209 à deux organes - un entraîneur 212 et une tige 213 de basculement du réflecteur du projecteur - le correcteur comportant en outre un manchon 214 de réglage manuel de la position de la tige.

Le boîtier 211 est un élément tubulaire d'axe 215 avec un flasque d'extrémité 216, opposé à l'extrémité d'actionnement 210 de la tige 213.

La gaine 217 d'un câble de réglage 218 est fixée sur une coiffe centrale 250 en saillie hors du flasque 216 du boîtier.

A proximité du flasque d'extrémité 216, sur la jupe tubulaire 219 du boîtier, est monté un pignon rotatif 220, qu'un opérateur peut entraîner en rotation à l'aide d'une visseuse.

Le manchon de réglage 214, d'axe 215, comporte, du côté de son extrémité opposée à l'extrémité d'actionnement 210 de la tige, une couronne dentée 224 destinée à être entraînée en rotation par le pignon 220. L'autre 251 de ses extrémités comporte, sur sa paroi intérieure, des cannelures axiales internes d'entraînement en rotation de l'extrémité de la tige opposée à son extrémité de basculement 210. Ces cannelures permettront le coulissement axial de la tige lors des réglages de conduite.

L'entraîneur 212 se présente sous la forme d'un long cylindre d'axe 215.

Du côté de l'extrémité d'actionnement 210 de la tige 213, il présente un filetage 252 destiné à coopérer avec un taraudage correspondant de la tige 213. Du côté opposé, l'entraîneur est évidé et comporte un logement 230 de réception d'un embout 231 du câble 218 qui se trouve ainsi ancré dans l'entraîneur 212. Dans sa partie centrale, l'entraîneur comporte un rebord annulaire 226 destiné à servir d'appui à un ressort de rappel 228 s'étendant autour de l'entraîneur, entre le rebord 226 et l'extrémité évidée 230, le ressort 228 prenant appui, à son autre bout, contre un élément 253 du boîtier.

On notera que le boîtier est également conformé pour présenter un méplat 254 empêchant la rotation de l'entraîneur.

La tige d'actionnement 213 a une forme générale d'un manchon d'axe 215, vissé sur la partie filetée 252 de l'entraîneur, par un taraudage correspondant 255. L'extrémité 256 de la tige 213, opposée à son extrémité d'actionnement 210, comporte des cannelures externes axiales agencées pour coopérer avec les cannelures internes de l'extrémité 251 du manchon 214 et être ainsi entraînée en rotation par le manchon 214 tout en permettant son coulissement axial dans ce manchon sous l'action de l'entraîneur.

Le câble 218 s'étend depuis l'embout d'ancrage 231, à travers la gaine 217, jusqu'à un bouton de commande situé sur le tableau de bord du véhicule sur lequel est monté le projecteur dont le réflecteur est à actionner.

Après la description de ce correcteur, son fonctionnement va maintenant être abordé.

### Réglage manuel initial

A l'aide d'une visseuse, on fait tourner le pignon de réglage 220 qui entraîne en rotation la couronne dentée 224 et donc le manchon 214. Du fait des cannelures internes de la portion d'extrémité 251 du manchon 214 et des cannelures externes de la portion d'extrémité 256 de la tige 213, le manchon 214 entraîne la tige 213 en rotation. De ce fait, et l'entraîneur 212 ne pouvant pas tourner, la tige se visse ou se dévisse sur l'entraîneur et donc se translate dans un sens ou dans l'autre le long de l'entraîneur.

Lors de ce réglage manuel, l'entraîneur reste immobile en translation et l'état du ressort 228 n'est pas modifié.

Ultérieurement, pour le réglage lors de la conduite du véhicule, quand le câble 28 est sollicité, contre l'action du ressort 218, il tire l'entraîneur 212 dans lequel il est ancré et l'entraîneur entraîne avec lui la tige qui est vissée dessus et qui peut coulisser dans le manchon 214.

## Revendications

1. Correcteur de portée à câble pour projecteur (2) de véhicule automobile comportant un réflecteur de faisceau (4) monté pour basculer sous l'action du correcteur (1), le correcteur (1) comportant, dans un boîtier (11 ; 111 ; 211), un équipage (9 ; 109 ; 209) à deux organes constitué d'un entraîneur (12 ;112 ;212) et d'une tige (13; 113; 213)de basculement du réflecteur (4), un câble (18; 118 ; 218) de réglage dans une gaine (17; 117; 217), ancré sur un des deux organes de l'équipage, et d'entraînement en translation de la tige contre l'action d'un ressort de rappel (28 ; 128 ; 218) en appui contre l'entraîneur, et des moyens (20 ; 14 ; 120 ; 114 ; 220 ; 214) de réglage initial manuel de la position de la tige pour l'entraîner en translation, **caractérisé en ce que** lesdits moyens de réglage initial manuel comportent une liaison entre un manchon de réglage (14 ; 114; 214), immobile en translation par rapport au boîtier, et l'autre organe de l'équipage (9; 109; 209), agencée de façon qu'une rotation du manchon de réglage (14 ; 114 ; 214) entraîne lors du réglage initial manuel une translation dudit autre organe de l'équipage (9; 109; 209), l'entraineur (12 ;112 ;212) étant, au cours de cette rotation du manchon de réglage (14 ;114 ;214), immobile par rapport à une pièce de l'ensemble constitué de la tige (13 ;113 ;213) et du boitier (11 ;111 ;211), le ressort de rappel (28 ;128 ;228) étant positionné entre l'entraineur (12 ;112 ;212) et ladite pièce dudit ensemble par rapport à laquelle l'entraineur (12; 112; 212) est immobile , de manière à ce que les moyens de réglage initial manuel entraînent la tige sans modifier l'état du ressort de rappel.

2. Correcteur selon la revendication 1, dans lequel le manchon de réglage manuel (14 ; 114 ; 214) comporte une couronne dentée (24 ; 124 ; 224) agencée pour coopérer avec un pignon d'entraînement (20 ; 120 ; 220).

3. Correcteur selon la revendication 1 ou 2, dans lequel la tige (13 ; 113) est montée coulissante dans l'entraîneur, le ressort de rappel (28; 128) est en appui contre la tige et l'entraîneur et le câble de réglage (18 ; 118) est ancré dans la tige (13 ; 113).

4. Correcteur selon la revendication 3, dans lequel le manchon (14) est vissé sur l'entraîneur (12) et la gaine (18) du câble est montée sur le boîtier (11), la rotation du manchon (14) provoquant la translation de l'entraîneur (12) et, avec lui, la translation de la tige, du ressort, et du câble.

5. Correcteur selon la revendication 4, dans lequel le ressort de rappel (28) est en appui contre un épaulement annulaire (32) de la tige (13) et un rebord intérieur (27) de l'entraîneur (12).

6. Correcteur selon la revendication 3, dans lequel l'entraîneur (112) est vissé dans le boîtier (111, 116) et la gaine (117) est montée sur l'entraîneur (112, 159), le manchon (114) est agencé pour entraîner au cours de la rotation du manchon de réglage l'entraîneur (112) en rotation qui est entraîné en translation par le mouvement hélicoïdal avec le boîtier (111, 116) dans lequel il est vissé (150, 158), la tige (113) étant conformée pour être entraînée en translation par l'entraîneur (112).

7. Correcteur selon la revendication 6, dans lequel le manchon (114) comporte des cannelures internes axiales (154) d'entraînement en rotation d'une nervure radiale externe (157) de l'entraîneur (112).

8. Correcteur selon la revendication 7, dans lequel le ressort de rappel (128) est en appui contre un épaulement annulaire médian (161) de la tige et une nervure radiale interne (162) de l'entraîneur.

9. Correcteur selon l'une des revendications 6 à 8, dans lequel la tige d'actionnement (113) comporte un épaulement annulaire d'extrémité (163) et une jupe d'entraînement (164) entourant un bord d'extrémité (156) de l'entraîneur (112).

10. Correcteur selon la revendication 1 ou 2, dans lequel la tige de basculement (213) est au cours de la rotation du manchon de réglage animée d'un mouvement hélicoïdal grâce au manchon (214) et à l'entraîneur (212) sur lequel elle est vissée, le ressort de rappel (228) est en appui contre l'entraîneur (212) et le boîtier (211), l'entraîneur (212) est bloqué en rotation et le câble de réglage (218) est ancré dans l'entraîneur (212) .

11. Correcteur selon la revendication 10, dans lequel le manchon (214) comporte des cannelures internes axiales (251) et la tige, des cannelures externes axiales (256), pour l'entraînement en rotation de la tige par le manchon.

## Patentansprüche

1. Bereichskorrektor mit Kabel für einen Kraftfahrzeugscheinwerfer (2), der einen Strahlreflektor (4) umfasst, der zum Neigen unter dem Wirken des Korrektors (1) montiert ist, wobei der Korrektor (1), in einem Gehäuse (11; 111; 211), eine Ausrüstung (9; 109; 209) mit zwei Organen, die aus einem Mitnehmer (12; 112; 212) und einem Stab (13; 113; 213) zur Neigung des Reflektors (4) gebildet sind, ein Steuerungskabel (18; 118; 218) in einer Hülle (17; 17; 217), das auf einem der zwei Organe zur Neigung verankert ist und zur translatorischen Mitnahme des Stabes gegen das Wirken einer Rückstellfeder (28; 128; 218) gegen den Mitnehmer abgestützt ist, und anfangs manuelle Steuerungsmittel (20; 14; 120; 114; 220; 214) für die Position des Stabes umfasst, um ihn translatorisch mitzunehmen, **dadurch gekennzeichnet, dass** die anfangs manuellen Steuerungsmittel eine Verbindung zwischen einer translatorisch hinsichtlich des Gehäuses unbeweglichen Steuerungsmanschette (14; 114; 214) umfassen, und dass das andere Ausrüstungsorgan (9; 109; 209) derart angeordnet ist, dass eine Rotation der Steuerungsmanschette (14; 114; 214) während der anfangs manuellen Steuerung eine Translation des anderen Ausrüstungsorgans (9; 109; 209) antreibt, wobei der Mitnehmer (12; 112; 212) im Laufe dieser Rotation der Steuerungsmanschette (14; 114; 214) hinsichtlich eines Stückes der Gruppe unbeweglich ist, die aus dem Stab (13; 113; 213) und dem Gehäuse (11; 111; 211) gebildet wird, wobei die Rückstellfeder (28; 128; 228), die zwischen dem Mitnehmer (12; 112; 212) und dem Stück der Gruppe hinsichtlich ihres Mitnehmers (12; 112; 212) positioniert ist, auf eine Weise unbeweglich ist, dass die angfangs manuellen Steuerungsmittel den Stab mitnehmen, ohne den Zustand der Rückstellfeder zu verändern.

2. Korrektor nach Anspruch 1, in welchem die manuelle Steuerungsmanschette (14; 114; 214) einen Zahnkranz (24; 124; 224) umfasst, der so angeordnet ist, dass er mit einem Antriebsritzel (20; 120; 220) zusammenwirkt.

3. Korrektor nach Anspruch 1 oder 2, wobei der Stab (13; 113) verschiebbar im Mitnehmer montiert ist, wobei die Rückstellfeder (28; 128) gegen den Stab und den Mitnehmer abgestützt ist und das Steuerungskabel (18; 118) im Stab (13; 113) verankert ist.

4. Korrektor nach Anspruch 3, wobei die Manschette (14) auf den Mitnehmer (12) geschraubt ist und die Hülle (18) des Kabels auf dem Gehäuse (11) montiert ist, wobei die Rotation der Manschette (14) die Translation des Mitnehmers (12) bewirkt und mit diesem die Translation des Stabes, der Feder und des Kabels.

5. Korrektor nach Anspruch 4, wobei die Rückstellfeder (28) gegen einen ringförmigen Vorsprung (32) des Stabes (13) und einen Innenrand (27) des Mitnehmers (12) abgestützt ist.

6. Korrektor nach Anspruch 3, wobei der Mitnehmer (112) im Gehäuse (111, 116) eingeschraubt ist und die Hülle (117) auf dem Mitnehmer (112, 159) montiert ist, wobei die Manschette (114) zum Mitnehmen, im Laufe der Rotation der Steuerungsmanschette, des Mitnehmers (112) in Rotation angeordnet ist, der translatorisch durch die schraubenförmige Bewegung mit dem Gehäuse (111, 116) angetrieben wird, in welchem er eingeschraubt ist (150, 158), wobei der Stab (113) dazu ausgebildte ist, translatorisch durch den Mitnehmer (112) angetrieben zu werden.

7. Korrektor nach Anspruch 6, wobei die Manschette (114) innere axiale Mitnahmerillen (154) in Rotation einer radialen externen Rippe (157) des Mitnehmers (112) aufweist.

8. Korrektor nach Anspruch 7, wobei die Rückstellfeder (128) gegen einen ringförmigen Mittelvorsprung (161) des Stabes und eine radiale innere Rippe (162) des Mitnehmers abgestützt ist.

9. Korrektor nach einem der Ansprüche 6 bis 8, wobei der Betätigungsstab (113) einen ringförmigen Endvorsprung (163) und einen Mitnahmemantel (164) umfasst, der einen Endrand (156) des Mitnehmers (112) umgibt.

10. Korrektor nach Anspruch 1 oder 2, wobei der Neigungsstab (213) im Laufe der Rotation der Steuerungsmanschette von einer schraubenförmigen Bewegung dank der Manschette (214) und des Mitnehmers (212) animiert ist, auf welchen er geschraubt ist, wobei die Rückstellfeder (228) gegen den Mitnehmer (212) und das Gehäuse (211) abgestütz ist, wobei der Mitnehmer (212) in der Rotation blockiert ist und das Steuerungskabel (218) im Mitnemher (212) verankert ist.

11. Korrektor nach Anspruch 10, wobei die Manschette (214) innere axilale Rillen (251) umfasst und die Stange externe axiale Rillen (256) für die rotatorische Mitnahme der Stange gegenüber der Manschette umfasst.

## Claims

1. A cable range corrector for a spotlight (2) of an automobile vehicle, comprising a beam reflector (4) mounted so as to tip over under the action of the corrector (1), the corrector (1) comprising, within a casing (11; 111; 211), an equipment (9; 109; 209) with two members comprised of a driver (12; 112; 212) and a tipping rod (13; 113; 213) for the reflector, an adjustment cable (18; 118; 218) in a sheath (17; 117; 217), being anchored on one of the two members of the equipment, and allowing for driving in translation the rod against the action of a return spring (28; 128; 228) in abutment against the driver, and initial manual adjustment means (20; 14; 120; 114; 220; 214) for the rod position so as to drive it in translation, **characterized in that** said initial manual adjustment means comprise a connection between an adjustment sleeve (14; 114; 214) immobilized in translation with respect to the casing and the other member of the equipment (9; 109; 209) arranged so that a rotation of the adjustment sleeve (14; 114; 214) drives, upon the initial manual adjustment, a translation of said other member of the equipment (9; 109; 209), driver (12; 112; 212) being, upon this rotation of the adjustment sleeve (14; 114; 214), immobilized with respect to a piece of the unit comprised of the rod (13; 113; 213) and the casing (11; 111; 211), the return spring (28; 128; 228) being arranged between the driver (12; 112; 212) and said piece of said unit against which the driver (12; 112; 212) is immobilized, so that the initial manual adjustment means drive the rod without modifying the condition of the return spring (28; 128; 228).

2. The corrector according to claim 1, wherein the manual adjustment sleeve (14; 114; 210) comprises a ring gear (24; 124; 224) arranged so as to cooperate with a driving sprocket (20; 120; 220).

3. The corrector according to claim 1 or 2, wherein the rod (13; 133) is slidingly mounted within the driver, the return spring (28; 128) is in abutment against the rod and against the driver and the adjustment cable (18; 118) is anchored in the rod (13; 113).

4. The corrector according to claim 3, wherein the sleeve (14) is screwed on the driver (12) and the cable sheath (18) is mounted on the casing (11), the rotation of the sleeve (14) causing the translation of the driver (12) and, with it, the translation of the rod, of the spring and of the cable.

5. The corrector according to claim 4, wherein the return spring (28) is in abutment against an annular shoulder (32) of the rod (13) and an internal rim (27) of the driver (12).

6. The corrector according to claim 3, wherein the driver (112) is screwed in the casing (111, 116) and the sheath (117) is mounted on the driver (112, 159), the sleeve (114) is arranged to drive the driver (112) in rotation, which is driven in translation and thus in a helical movement by the casing (111, 116) in which it is screwed (150, 158), the rod (113) being formed to be driven in translation by the driver (112).

7. The corrector according to claim 6, wherein the sleeve (114) comprises internal axial grooves (154) for driving in rotation an external radial rib (157) of the driver (112).

8. The corrector according claim 7, wherein the return spring (128) is in abutment against a median annular shoulder (161) of the rod and an internal radial rib (162) of the driver.

9. The corrector according to any of claims 6 to 8, wherein the operating rod (113) comprises an annular end shoulder (163) and a driving skirt (164) surrounding an end edge (156) of the driver (112).

10. The corrector according to claim 1 or 2, wherein the tipping rod (213) is subjected, upon the rotation of the adjustment sleeve, to a helical movement thanks to the sleeve (214) and the driver (212) on which it is screwed, the return spring (228) is in abutment against the driver (212) and the casing (211), the driver (212) is blocked in rotation and the adjustment cable (218) is anchored in the driver (212).

11. The corrector according to claim 10, wherein the sleeve (214) comprises internal axial grooves (251) and the rod, external axial grooves (256), for driving in rotation the rod by the sleeve.
